Europäisches Patentamt

European Patent Office

Office européen des brevets

(11) Publication number: **0 094 701**
**A1**

# (12) EUROPEAN PATENT APPLICATION

(21) Application number: **83200614.2**

(22) Date of filing: **29.04.83**

(51) Int. Cl.³: **B 62 D 53/06**

(30) Priority: **09.05.82 IL 65720**

(43) Date of publication of application:
**23.11.83 Bulletin 83/47**

(84) Designated Contracting States:
**AT BE CH DE FR GB IT LI NL SE**

(71) Applicant: **AGAM METAL WORKS LIMITED**
Haamelim Street P.O. Box 10105
Haifa-Bay 26110(IL)

(72) Inventor: **Mayer, Gideon**
44 Ben Gurion Avenue
IL-Kiriat-Bialik(IL)

(74) Representative: **van der Beek, George Frans et al,**
Nederlandsch Octrooibureau Johan de Wittlaan 15 P.O.
Box 29720
NL-2502 LS Den Haag(NL)

(54) Semitrailer for container transport.

(57) A semi-trailer is adapted to transport alternatively a
20'-shipping container and a 40'-container. It comprises a
main deck (I) provided with a wheel carriage, a head portion
(II) and a tail portion (III), both narrower than the main deck.
The head and tail portion are completely inserted into the
main deck and overlap completely whenever the semitrailer
is adapted to the carrying of a 20'-container. Both the head
portion and the tail portion are pulled out of the main deck
for transporting a 40'-container, overlapping with the main
portion only as far as necessary for the stability of the
structure.

FIG. 2

EP 0 094 701 A1

Semitrailer for container transport.

The invention relates to semitrailers, more especially to container transporters, having an elongated, extendible load bed.

The increasing use of transport containers has likewise led to the use of special transport vehicles, most of them semitrailers adapted to be attached to a tractor and to be released from this tractor at destination. The conventional semitrailer is supported by wheels adjacent its rear end and by a fifth wheel on the tractor to which it is connected by means of an attachment pin. While off the tractor its front is supported on frontal support jacks which are adjusted to the height required for releasing the pin from the fifth wheel. Since the standard length of containers is either 20' or 40', the transporters are either of the short type accommodating 20'-containers, or of the long type accommodating one 40'-container or, alternatively, two 20'-containers. In order to keep the containers rigidly attached to the semitrailer platform they are attached at their corners to so-called twist locks making the use of sideboards unnecessary, therefore a semitrailer for transporting containers consists mostly of a flat platform out of which project the locking posts.

Although the long-type semitrailer is advantageous in that it can easily convey 20'-containers to their separate destinations, its length becomes a disadvantage as soon as it has been unloaded, since it is not easy to steer a 40'-trailer through dense traffic. It would, therefore, be of great advantage to provide means for reducing the wheel base of semitrailer and tractor for empty travelling, which means should also serve to contract or to extend the load bed so as to alternately carry 20'- or 40'-containers.

In container transport it is the rule that the load should be equally distributed on the fifth wheel in front and on the trailer axles in the rear, and for this reason the attachment pin to the fifth wheel on semitrailers is positioned at the same distance from the front end as the rear suspension center is from the rear end of the platform.

It is, therefore, the main object of the present invention to provide an extendible semitrailer for container transport that is adaptable to carry 40'- as well as 20'-containers, by respectively elongating or shortening the platform length and the distance between the twist locks at the front and the rear end.

It is a further object to have the load evenly distributed on the fifth wheel of the tractor and on the rear wheel assembly of the semitrailer, both in the case of a 20'-container and of a 40'-container loaded thereon.

The semitrailer of the present invention consists of a main body, a head portion and a tail portion, both of which are adapted to be pulled out of the main body from a locked "closed" position corresponding to the length of a 20'-container to a locked, "open" position corresponding to a 40'-container. The main body consists of an oblong, planar deck portion supported by lateral beams and is provided with axles, suspension means and wheels in its rear part. The two lateral beams are provided along their opposed insides with a first and a second pair of cooperating, superposed longitudinal guides, enclosing the head and the tail portion respectively.

The head portion comprises a long rear portion narrower than, and of substantially the same length as the main body, and of a short front part wider than the rear part and carrying at its outer ends two container twist locks which extend upwardly above the level of the deck of the main body. The rear port is longitudinally translatable in the first pair of guides from a "closed" position wherein the respective rear ends of the main body and the head portion coincide and wherein the front is adjacent the front end of the main body, to an "open" position wherein the rear of the head portion engages overlappingly with the front part of the main body by a length sufficient to keep the two components in rigid alignment.

The tail portion comprises a front part of shorter length and smaller width than the main body which is translatably supported therein by the second pair of guides, and of a rear part wider than the main body and carrying two container twist locks on opposite ends, said locks extending upwardly to at least the level of the deck of the main body. In "closed" position the tail portion is slid into the main body with only the rear part protruding therefrom, and in "open" position the two components engage overlappingly by a length sufficient to keep them in rigid alignment.

In a preferred embodiment of the semitrailer the head portion is translatably carried by the upper pair of guides in the main body, and the tail portion similarly in the lower pair of guides, the latter guides extending from the rear end of the main body in frontal direction by a length corresponding to that of the tail portion.

The width of the main body, the head portion and the tail portion is preferably smaller than the width of the container to be loaded on the deck of the semitrailer, and only the front part of the head portion and the rear part of the tail portion are of container width, the distance between the respective twist locks corresponding to the corner castings of the containers.

For better understanding of the invention a specific embodiment of the semitrailer will now be more fully described with reference to the accompanying drawings wherein:

Fig. 1 is an isomeric view of a semitrailer in "closed" position,

Fig. 2 is the semitrailer of Fig. 1 in "open" position,

Fig. 3 is the trailer of Fig. 5 in "closed" position, and

Fig. 4 is a longitudinal section through the semitrailer in "open" position.

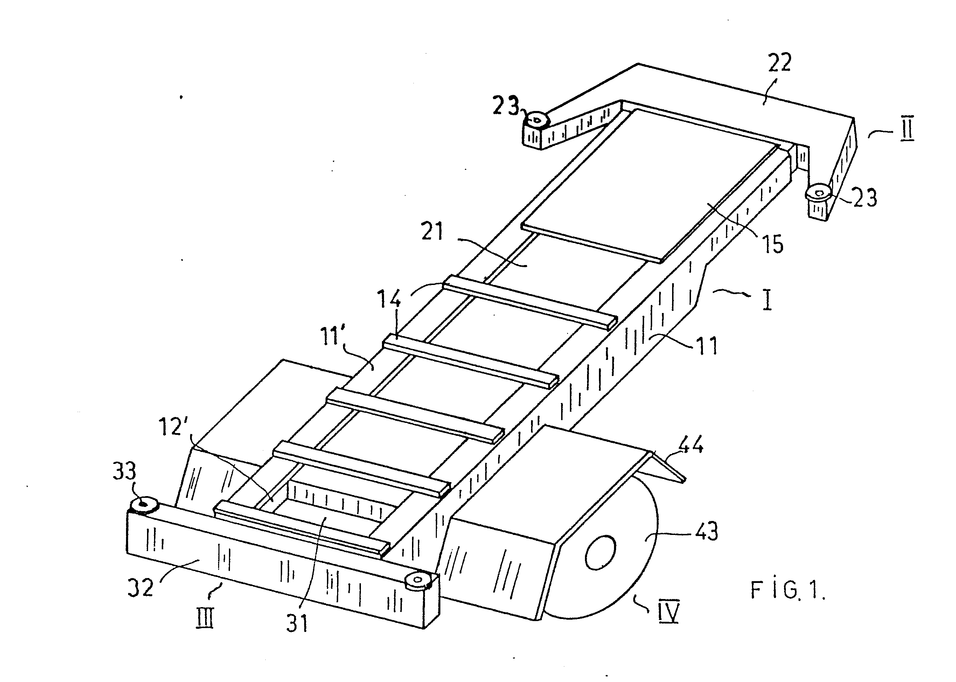

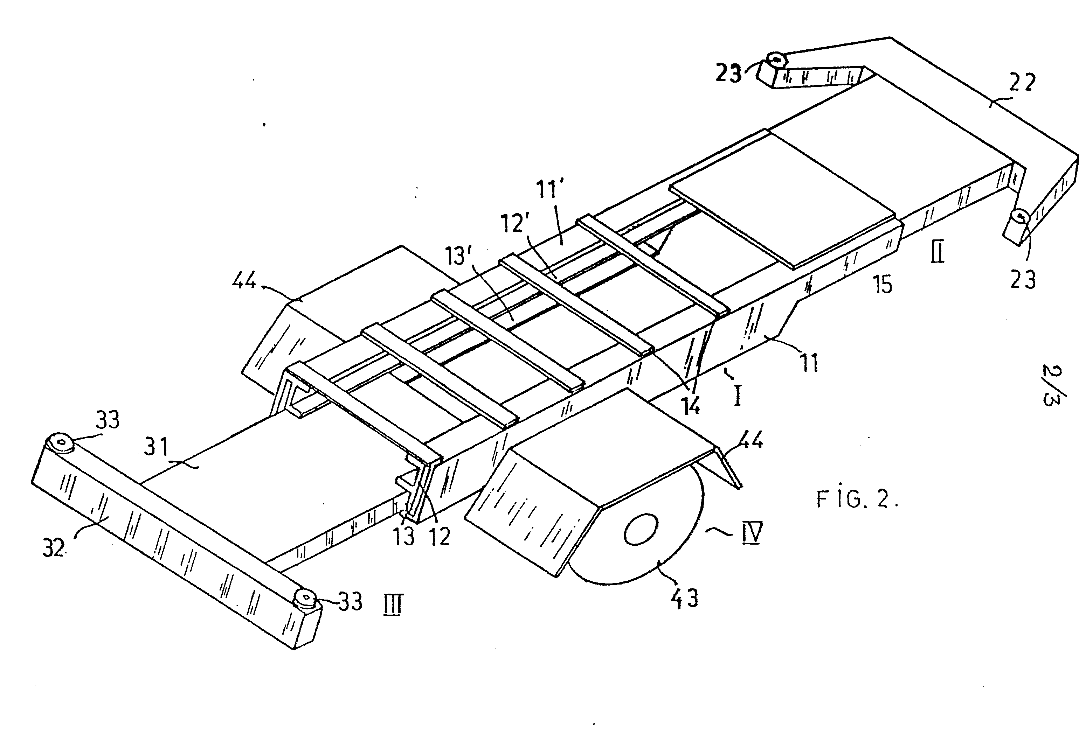

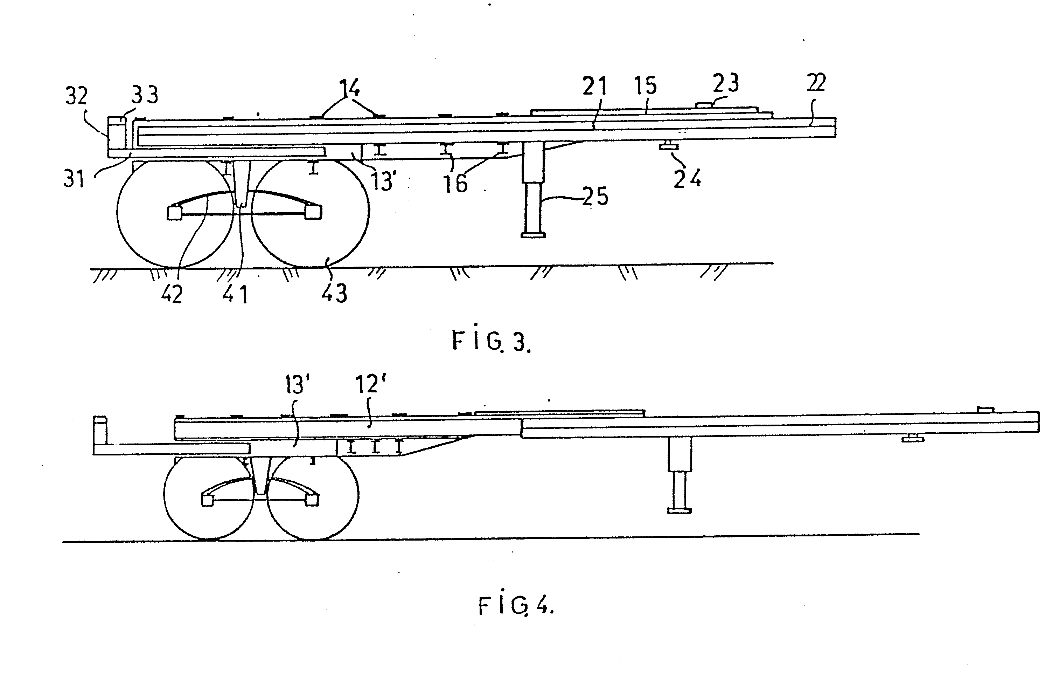

With reference to the drawings – which are substantially diagrammatic due to the small scale at which they are drawn – a semi-trailer comprises a main body I, a head portion II, a tail portion III, and a carriage IV consisting of wheels, axles, spring suspension, brake mechanism and other accessories. The isometric drawings, Figures 1 and 2, show only one axle, but it is generally preferred to provide two axles as shown in Figures 3 and 4. The main body consists of two lateral beams 11, 11' which are on their opposed insides provided with an upper pair of through-going, channel-shaped guides 12, 12' and with a lower pair of shorter channel-shaped guides 13, 13'.

The beams are connected along their top portions by a flat deck which consists of a number of cross-beams 14 and a front plate 15. The two beams are further connected in their bottom portions by three I-beams 16 which serve to reinforce the body structure. Near the rear end carriage brackets 41 support suspension springs 42 which hold axles and wheels 43 in a known manner. Mudgards 44 cover the wheels on both sides of the body.

At this point it must be reiterated that only those parts are shown in the drawings that are essential for understanding the construction and the working of the semitrailer, but that all accessories have been omitted.

The tail portion III consists of an oblong flat front portion running in the lower guides of the main body and of a short rear portion 32 which is wider than the front portion and carries at its both ends one twist lock 33 each, their distance correspondig to the standard width of containers and their corner castings.

The front portion 31 is much shorter than the main body and – in "closed" state – enters it by about one quarter of the total length of the main body. The rear portion 32 is in the shape of a strong transverse, and in "closed" position it directly adjoins the rear end of the main body.

The head portion consists of a rear portion 21 in the form of an oblong, rectangular and flat box of a length commensurate with that of the main body, and of a front portion 22 in the shape of an open "U" the arms of which extend in outward and rearward direction. Two twist locks 23 are located at each of the extreme ends of the arms of the "U" their distance corresponding to the distance between the corner castings of standard containers. The twist locks on both tail and head portion project slightly above the level of the deck surface of the main body (preferably about 20 mm), thus supporting the containers in their four corners only, while no load is carried by any portion of the semitrailer between front and rear end.

The head portion is provided on its underside with a connecting pin 24 serving to attach the semitrailer to a tractor, and with jack means 25 serving to support the vehicles as long as it is not attached to a tractor.

Figures 1 and 3 of the drawings show the head and tail portions slid into the main body with only the wider parts 32 and 22 projecting out of the ends. In this position the distance between the front and the rear twist locks corresponds exactly to the position of the corner castings on a 20'-container, by which it is fastened to the semitrailer.

Figures 2 and 4 show the semitrailer in "open" state with the

5

head and tail portions extended out of the main body to a maximum, whereby the twist locks are suitable for attachment to the corner castings of a 40'-container. In Figure 4 the tail portion is shown to have been only partly pulled of the main body and not to be in the fully open position.

Both positions, open and closed, are fixed in rigid connection by pins or similar means passing through cooperating openings in the interengaging components. The head and tail portions are, advantageously, pulled in or out of the main body by means of a tractor while the main body is made stationary by brakes or brake blocks.

The advantages of the extendible semitrailer are self-understood:
it lends itself to the transport of 20'- and 40'-containers, while in both cases the load is concentrated on the front and the rear ends only, resulting in a relatively light central structure.

Owing to the fact after having transported a 40'-container, it can be contracted to the length of a 20'-container makes it well movable and steerable through town traffic and over narrow roads, a matter not readily obtainable with a conventional 40'-semitrailer. It is only by placing the tail and the head portions into guides at different levels, that the double length can be reached. Another important point is that the load is, more or less, evenly concentrated on the fifth wheel of the tractor and the carriage of the semitrailer, whereby easy steering and correct road surface loading are obtained.

It will be onderstood that the aforegoing drawings and description are in respect of one embodiment of the invention only, but that modifications and alterations may be made thereto by a person skilled in the art, without deviating from the spirit of the invention and the scope of the appended claims.

It is, for instance, proposed to support the head portion in a lower pair of guides, and the tail portion in an upper pair of guides, this would, however, require a different design and construction of the main body in a way that would be less advantageous than the present design.

CLAIMS.

1. A semitrailer suitable for the alternative transport of one 20'-container or one 40'-container, comprising a main body, a head portion and a tail portion, the latter two being adapted to be pulled out of said main body to the front and the rear respectively, from a completely overlapping position corresponding to the length of a 20'-container to a position corresponding to the length of a 40'-container, wherein said head and said tail portion overlap with said main body by a length sufficient to keep said components in rigid alignment, and wherein

said main body is provided with a carriage in its rear portion and consists of an oblong, flat deck supported by two lateral beams, said beams being provided along their opposed insides with a first and with a second pair of cooperating, superposed guide rails enclosing said head and said tail portion along their respective lateral adges,

said head portion consists of a long rear part narrower than, and of substantially the same length as, said main body provided in its underside with a pin for attachment to a fifth wheel of a tractor, said rear part being translatably supported by said pair of guide rails, and of a short front part wider than said main body and projecting out of the front of said main body, said front part carrying at its outer ends two container twist locks which extend upwardly slightly above the upper surface of said main body,

said tail portion consists of a front part of shorter length and smaller width than said main body, being translatably supported by said second pair of guide rails, and of a rear part wider than said main body and carrying at its outer ends two containers twist locks extending upwardly slightly above the upper surface of said main body.

2. The semitrailer of claim 1, wherein the head portion is carried by the upper pair of said superposed guide rails in said main body, and wherein said tail portion is carried in the lower pair of said superposed guide rails.

3. The semitrailer of claim 2, wherein said lower pair of guide rails extend from the rear end of said main body in frontal direction by a length substantially corresponding to the length of said tail portion.

4. The semitrailer of claim 1, wherein the width of said main body and of said head and tail portions is smaller than the width of a container to be carried, and wherein said front part of said head portion and said rear part of said tail portion are of the width of a container, the position of said twist locks in said front and said rear part corresponding to the position of the corner castings in said container.

5. The semitrailer of claim 1, wherein said head portion is provided on its underside with jacking means.

6. The semitrailer of claim 1, wherein said front part of said head portion is in the shape of a "U" with its two arms extending rearwardly and outwardly and carrying at their extreme ends one twist lock each, the base of said "U" being adjacent the front end of said main body in completely overlapping position.

7. The semitrailer of claim 1, wherein said rear part of said tail portion is in the shape of a strong transverse beam carrying at its ends one twist lock each, said rear part being adjacent the rear end of said main body in completely overlapping position.

FIG.1.

FIG. 2.

2/3

0094701

FIG. 3.

FIG 4.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 557 980  (K. KLAUS) <br> * Complete document * | 1 | B 62 D  53/06 |
| A | DE-U-1 988 891  (DEUTSCHE FRUEHAUF GMBH & CO. KG) * Page 6, line 14 - page 11, line 10; figures 1-3 * | 1 | |
| A | US-A-4 033 625  (T.H. FIKSE) * Claims 1, 3-5; column 2, line 53 - column 4, line 20; figures 1-8 * | 1 | |
| A | US-A-3 508 762  (R.A. PRATT) | | |
| A | FR-A-2 264 705  (BENALU S.A.) | | TECHNICAL FIELDS SEARCHED (Int. Cl. ³) <br> B 62 D  21/00 <br> B 62 D  53/00 |

The present search report has been drawn up for all claims

| Place of search | Date of completion of the search | Examiner |
|---|---|---|
| BERLIN | 03-08-1983 | PETTI P |